# FASCICULE DE BREVET EUROPEEN

(11) **EP 2 490 928 B1**
(45) Date de publication et mention de la délivrance du brevet: **29.05.2013**
(21) Numéro de dépôt: 10782663.8
(22) Date de dépôt: 20.10.2010
(51) Int. Cl.: B62D 3/12, F16H 55/28

(54) **DISPOSITIF DE POUSSOIR AVEC COMPENSATION DE JEU POUR DIRECTION A CREMAILLERE DE VEHICULE AUTOMOBILE**
SCHIEBEVORRICHTUNG MIT ABSTANDSKOMPENSATION FÜR DIE ZAHNSTANGENLENKUNG EINES KRAFTFAHRZEUGS
PUSH DEVICE WITH CLEARANCE COMPENSATION FOR RACK-AND-PINION STEERING OF A MOTOR VEHICLE

(30) Priorité: 23.10.2009 FR 0957460
(43) Date de publication de la demande: 29.08.2012
(73) Titulaire: JTEKT Europe, 69540 Irigny (FR)
(72) Inventeur: BROCHOT, Patrice, F-69600 Oullins (FR); REY, Laurent, F-69100 Villeurbanne (FR)
(74) Mandataire: Chevalier, Renaud Philippe
(86) Numéro de dépôt international: PCT/FR2010/052233
(87) Numéro de publication internationale: WO 2011/048328

(56) Documents cités:
- EP-A1- 1 738 989
- EP-A2- 0 770 538
- FR-A1- 2 219 868
- GB-A- 655 130
- US-A1- 2008 295 629
- US-B1- 6 247 375

## Description

La présente invention concerne, de façon générale, les directions à crémaillère des véhicules automobiles. Plus particulièrement, cette invention s'intéresse au dispositif dit « ligne poussoir » ou plus simplement « poussoir » d'une telle direction, dont la fonction est de maintenir la crémaillère en contact d'engrènement avec le pignon de direction tout en compensant les défauts de denture, ce dispositif ayant aussi pour rôle de faciliter le montage du pignon dans le carter de la direction à crémaillère. Encore plus particulièrement, l'invention se rapporte à un dispositif de poussoir dit « à excentrique », qui est pourvu d'un système de compensation automatique du jeu entre le pignon et la crémaillère.

Dans une direction à crémaillère de véhicule automobile, un pignon de direction est lié en rotation avec une colonne de direction, manoeuvrée à l'aide du volant de conduite du véhicule, souvent avec l'aide d'un système d'assistance hydraulique ou électrique. Le pignon de direction est en prise avec une crémaillère, montée coulissante en direction longitudinale dans un carter de direction. Les deux extrémités de la crémaillère, extérieures au carter, sont accouplées respectivement à deux biellettes de direction, qui sont elles-mêmes associées respectivement aux roues directrices gauche et droite du véhicule. Ainsi, la rotation du volant dans un sens ou dans l'autre, transmise par la colonne de direction au pignon, est convertie en un mouvement de translation correspondante de la crémaillère qui, par l'intermédiaire des biellettes, provoque l'orientation des roues directrices pour un braquage à droite ou un braquage à gauche.

Dans un tel système de direction, le mécanisme pignon-crémaillère, lié aux roues avant du véhicule par l'intermédiaire des biellettes, est soumis à des remontées d'efforts, à des chocs et à des vibrations, suivant l'état de la chaussée parcourue par le véhicule. En raison de l'angle formé par les biellettes avec la crémaillère, il peut alors se produire un effort sur la crémaillère, qui risque de l'écarter du pignon. Pour cette raison, la crémaillère est habituellement appliquée de façon permanente contre le pignon par un dispositif dit "poussoir", agissant élastiquement sur le dos de la crémaillère dans la région du pignon pour presser fortement la denture de cette crémaillère contre le pignon. Grâce à un tel poussoir, les défauts d'engrènement de la crémaillère avec le pignon sont compensés, et ledit poussoir assure aussi le guidage de la crémaillère, en contrôlant l'effort de coulissement de cette crémaillère dans le carter de direction.

Dans sa forme de réalisation la plus courante, le dispositif de poussoir comprend le poussoir proprement dit, qui est une pièce rigide montée mobile en translation dans une direction sensiblement perpendiculaire à l'axe longitudinal de la crémaillère, et qui est sollicitée vers le dos de la crémaillère par des moyens élastiques, de manière à s'appuyer sur le dos de la crémaillère par une partie terminale de forme adaptée, en particulier de profil concave, constituée généralement par un patin de friction permettant d'avoir un faible coefficient de friction entre ce patin et la crémaillère. Les moyens élastiques peuvent être constitués par un ressort hélicoïdal seul ou par une rondelle élastique métallique ou en élastomère, ou par l'association de tels éléments élastiques. Ces moyens élastiques prennent appui sur une vis de réglage, qui permet un réglage du recul du poussoir et qui matérialise ainsi la butée de fin de course du poussoir.

Comme précédemment indiqué, un tel dispositif permet d'obtenir un contact permanent entre le pignon et la crémaillère, tout en compensant les défauts des dentures de ces composants. Les moyens élastiques, du fait de leur action entre la vis de réglage et le poussoir, permettent également de compenser l'usure en fonctionnement du pignon, de la crémaillère et du patin de friction, mais dans ce cas le recul, autrement dit l'écart entre le poussoir et sa butée constituée par la vis de réglage, se trouve augmenté d'une valeur égale à l'usure cumulée de ces trois composants.

Les principaux inconvénients d'un tel dispositif de poussoir, et de l'effet d'accroissement du recul qui n'est pas compensé, sont une probabilité d'apparition de bruit en cas de roulage du véhicule sur une chaussée dégradée, et une augmentation du moment fléchissant dans la zone de contact des dentures du pignon et de la crémaillère, notamment en cas de fonctionnement à pleine charge. Un autre inconvénient de ce dispositif de poussoir est qu'il nécessite un réglage coûteux sur une ligne d'assemblage.

On connaît aussi des dispositifs de poussoirs de conception différente dits poussoirs « à excentrique », tels que décrits par exemple dans les documents de brevets US 6247375 B1, FR 2219868, EP 0770538 A2 et US 2008/0190229 A1. Dans un tel dispositif, un patin rotatif comprend une partie excentrée qui pousse la crémaillère vers le pignon, le patin rotatif étant monté tournant dans un carter, autour d'un axe parallèle à l'axe longitudinal de la crémaillère. La périphérie interne de ce patin est excentrée par rapport à sa périphérie externe, de telle manière que, lorsqu'il tourne dans le carter, sa partie excentrée forme une portée qui est appliquée contre le dos de la crémaillère et qui repousse celle-ci vers les dents du pignon, afin de les maintenir en prise.

Dans une réalisation particulière de poussoir à excentrique, décrite dans la demande de brevet français 08.06207 déposée le 6 novembre 2008 au nom du Demandeur, publiée le 7 mai 2010 sous le numéro FR 2938034, le patin rotatif est monté tournant sur un boîtier support, lui-même monté coulissant dans le carter de direction, suivant une direction parallèle au plan de la denture de la crémaillère et orthogonale à l'axe longitudinal de cette crémaillère. Un élément élastique tel qu'un ressort de compression est disposé entre la paroi du boîtier coulissant et le patin rotatif, pour solliciter ce patin en rotation dans un sens prédéfini. Un autre élément élastique tel qu'un joint torique est disposé entre le boîtier coulissant et une partie fixe, telle que le carter de direction. Le patin comporte un bras radial, sur lequel s'exerce l'effort du ressort de compression. Le patin présente une forme arquée et « en coin » qui permet au dispositif d'être particulièrement compact.

Toutefois, les dispositifs actuels de poussoirs à excentrique ne possèdent en général pas un système robuste et irréversible, permettant cependant un léger jeu de fonctionnement, pour absorber le jeu des dentures.

La présente invention donc pour but de fournir une réalisation perfectionnée de poussoir à excentrique, qui dispose en particulier d'une fonction de compensation de jeu automatique, à recul maîtrisé. Le document EP 1738 989 divulgue les caractéristiques du préambule de la revendication 1.

A cet effet, l'invention a pour objet un dispositif de poussoir à excentrique pour direction à crémaillère de véhicule automobile, le dispositif de poussoir comprenant un patin de forme arquée dont la périphérie interne est excentrée par rapport à la périphérie externe, le patin étant sollicité en rotation dans un sens par des moyens à ressort et étant prévu pour être appliqué par sa périphérie interne excentrée contre le dos de la crémaillère pour repousser celle-ci vers les dents du pignon de direction, le patin étant monté tournant sur un support et les moyens à ressort, disposés au niveau du support, agissant de préférence dans un plan parallèle à la denture de la crémaillère sur un bras radial solidaire du patin, ce dispositif de poussoir à excentrique étant caractérisé par le fait qu'il comporte un mécanisme de compensation de jeu qui comprend un organe de poussée monté mobile en translation sur le support mais immobilisé en rotation par rapport à ce support, et appuyé contre le bras radial du patin sous l'action d'un ressort de compression inséré entre cet organe de poussée et le support ou un élément solidaire du support, tandis qu'une butée mobile est montée tournante, coaxialement au ressort de compression, relativement au support ou à l'élément solidaire du support, la butée mobile étant pourvue, à son extrémité la plus proche du patin, d'au moins une denture à dents étagées coopérant avec au moins un cran formé sur l'organe de poussée, ou vice versa, la butée mobile étant liée par l'intermédiaire d'un ressort de torsion au support ou à l'élément solidaire du support, de telle sorte que le ou les crans puissent coopérer successivement avec les dents étagées de la ou chaque denture.

Avantageusement, la butée mobile est pourvue d'au moins deux dentures à dents étagées, disposées sur autant de secteurs, par exemple deux dentures diamétralement opposées occupant chacune un secteur de 180°, et l'organe de poussée comporte autant de crans coopérant avec ces dentures, de manière à stabiliser le mécanisme.

L'organe de poussée peut comporter deux rainures longitudinales, diamétralement opposées, qui coopèrent avec deux nervures correspondantes prévues sur des faces opposées du support, pour assurer le guidage en translation et l'immobilisation en rotation de cet organe de poussée.

Le poussoir à excentrique est ainsi pourvu d'un mécanisme de compensation de jeu, qui fonctionne par « seuils » en passant d'une dent à l'autre des dentures étagées de la butée mobile, ce qui permet de réduire le jeu de fonctionnement. Les composants de ce mécanisme assurent aussi le fonctionnement de base du poussoir à excentrique : l'organe de poussée est la pièce qui transmet au patin la poussée exercée par le ressort de compression, lui-même en appui contre cet organe de poussée, pour générer l'effort qui maintient la crémaillère en contact avec le pignon.

En fonctionnement normal, entre deux rattrapages de jeu, le mécanisme se trouve dans une configuration où les crans de l'organe de poussée se trouvent en contact contre des dents de la butée mobile, le contact étant maintenu par le ressort de torsion. Lorsqu'à la suite d'une usure, et sous l'action du ressort de compression, le jeu dépasse une certaine valeur si bien qu'il n'y a plus contact entre les crans de l'organe de poussée et les dents des dentures de la butée mobile, le ressort de torsion entraîne en rotation cette butée mobile jusqu'à ce qu'il se crée un nouveau contact, réalisé entre les crans de l'organe de poussée et les dents suivantes des dentures de la butée mobile. Le jeu se trouve ainsi réduit à une valeur plus faible, et ainsi de suite...

L'invention sera mieux comprise à l'aide de la description qui suit, en référence au dessin schématique représentant, à titre d'exemple, une forme d'exécution de ce dispositif de poussoir à excentrique.
Figure 1 est une vue extérieure d'une direction assistée électrique, équipée du dispositif de poussoir à excentrique objet de la présente invention ;
Figure 2 est une vue en coupe suivant II-II de figure 1, c'est-à-dire suivant un plan perpendiculaire à l'axe longitudinal de la crémaillère et passant par le dispositif de poussoir excentrique ;
Figure 3 est une vue en perspective éclatée de ce dispositif de poussoir ;
Figure 4 représente, en perspective éclatée, le mécanisme de compensation de jeu du dispositif de poussoir, avec ses divers composants ;
Figure 5 est une vue en perspective, et à plus grande échelle, de la butée mobile du mécanisme de compensation de jeu ;
Figure 6 est une autre vue en perspective de la butée mobile, montrant son extrémité opposée aux dentures ;
Figure 7 est une vue en perspective de l'organe d'appui du mécanisme de compensation de jeu ;
Figure 8 est une vue en perspective de l'organe de poussée de ce mécanisme ;
Figures 9 et 10 sont des schémas qui illustrent le fonctionnement du mécanisme de compensation de jeu ;
Figure 11 est un schéma similaire aux figures précédentes, montrant une variante relative aux dentures de la butée mobile.

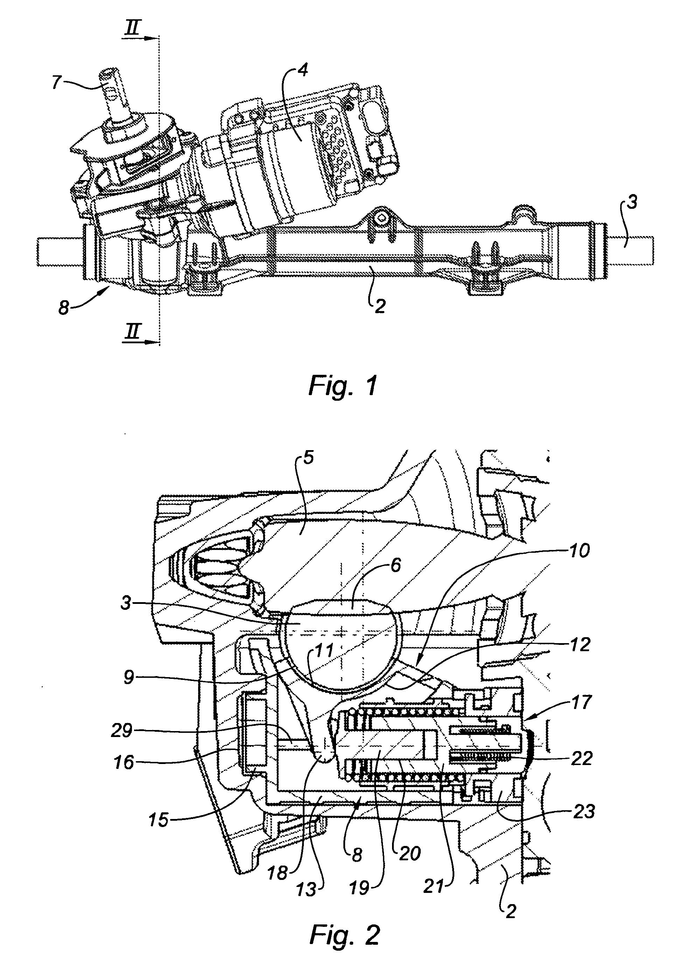

La figure 1 montre une direction assistée électrique de véhicule automobile, avec système d'assistance agissant au niveau du pignon de direction. La direction comprend un carter de direction 2, qui s'étend suivant un axe longitudinal A. Dans le carter de direction 2 est montée coulissante une crémaillère 3, dont les extrémités sortent aux extrémités du carter 2 et sont accouplées à des biellettes de direction (ici non représentées). Un moteur électrique d'assistance 4 est accouplé, par l'intermédiaire d'un réducteur de vitesse à engrenages, à un pignon de direction 5 qui est en prise avec la denture 6 de la crémaillère 3 (voir aussi figure 2). La référence 7 indique l'arbre d'entrée qui est lié au pignon de direction 5 et auquel est accouplée la colonne de direction (non représentée), manoeuvrée à l'aide du volant de conduite du véhicule.

Un dispositif de poussoir, désigné dans son ensemble par la référence 8, est prévu à proximité du pignon de direction 5, pour presser la denture 6 de la crémaillère 3 contre le pignon 5, le dispositif de poussoir 8 étant représenté en détail sur les figures 2 et suivantes.

Le dispositif de poussoir 8 est placé du côté du dos 9 de la crémaillère 3, autrement dit à l'opposé de la denture 6 de cette crémaillère 3 et aussi à l'opposé du pignon 5, ce dispositif de poussoir 8 étant logé dans une partie correspondante du carter de direction 2.

Le dispositif de poussoir 8, du type dit « à excentrique », comprend comme composant principal un patin 10, qui est une pièce de profil arrondi et, plus particulièrement, une pièce arquée qui possède une forme « en coin ». Le patin 10 présente une périphérie interne 11 en arc de cercle qui est excentrée par rapport à sa périphérie externe 12, elle aussi en arc de cercle. La périphérie interne 11, ainsi excentrée, du patin 10 forme une portée appliquée contre le dos 9 de la crémaillère 3.

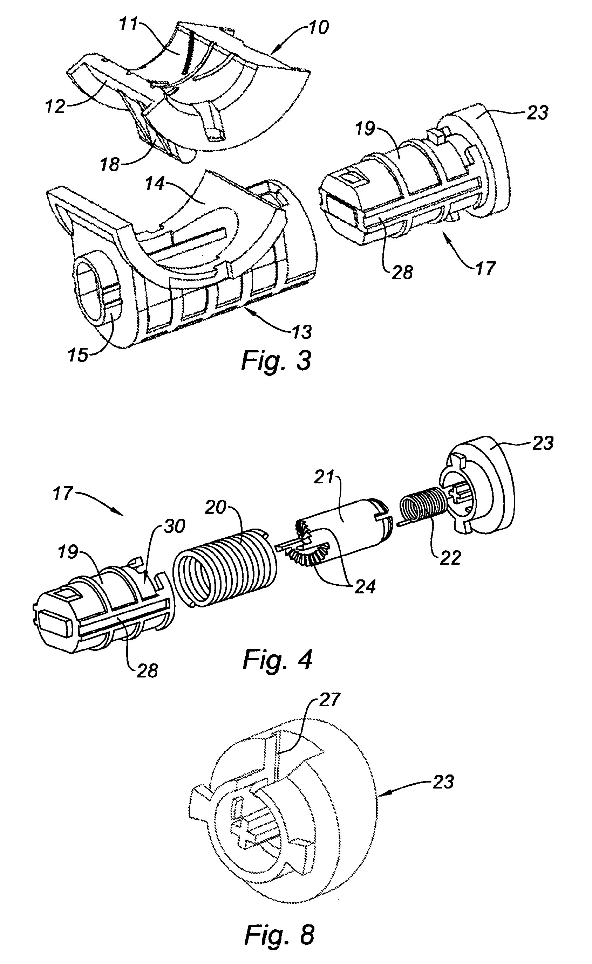

Le patin 10 est monté et guidé sur un support 13, lui-même monté dans la partie considérée du carter de direction 2, la configuration du support 13 étant bien visible sur la figure 3. Ce support 13 comporte un berceau 14 de forme arquée, sur laquelle prend appui de façon glissante la périphérie externe 12 du patin 10. A une extrémité, le support 13 présente une excroissance 15 de forme oblongue, engagée dans un évidement correspondant 16 de la partie de carter concernée.

Représenté comme une pièce monolithique, le patin 10 peut aussi être réalisé en deux ou plusieurs parties en matières distinctes, adaptées pour le contact glissant avec la crémaillère 3 d'une part et avec le support 13 d'autre part. Divers modes de guidage du patin 10 sur le berceau 14 du support 13 sont envisageables, pour réaliser la liaison en rotation entre le patin 10 et le support 13.

Le patin 10 est mis en rotation par rapport au support 13 par application d'une poussée, exercée par un mécanisme de compensation de jeu 17 sur un bras radial 18 que comporte le patin 10. Le détail du mécanisme de compensation de jeu 17 est visible sur la figure 2, ainsi que sur les figures 4 et suivantes.

Le mécanisme de compensation de jeu 17 est composé de cinq éléments principaux, à savoir : un organe de poussée 19, un ressort de compression 20, une butée mobile 21, un ressort de torsion 22 et un organe d'appui 23, tous disposés coaxialement.

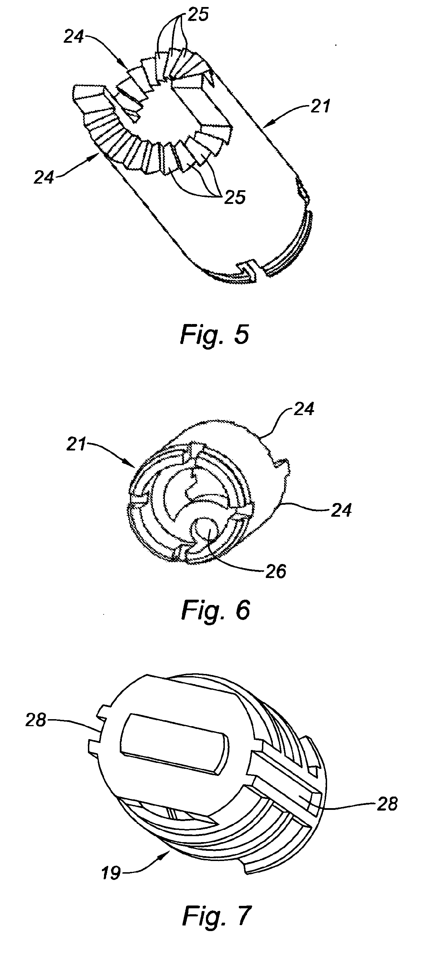

L'organe d'appui 23, représenté seul sur la figure 7, est lié au support 13 dans la partie de ce dernier opposée à l'excroissance 15, de telle sorte qu'il n'y ait pas de mouvement relatif entre l'organe d'appui 23 et le support 13 durant le fonctionnement.

La butée mobile 21, de forme générale cylindrique et évidée en son centre (voir figure 5), est montée tournante relativement à l'organe d'appui 23, dans lequel elle s'emboîte. A son extrémité éloignée de l'organe d'appui 23, la butée mobile 21 présente deux dentures étagées 24, qui s'étendent respectivement sur deux secteurs de 180°. Chaque denture 24 comporte une série de dents 25.

A son extrémité opposée aux dentures 24 (voir figure 6), la butée mobile 21 présente un logement 26 prévu pour recevoir une extrémité du ressort de torsion 22. L'autre extrémité du ressort de torsion 22 est reçue dans une zone d'attache 27 prévue sur l'organe d'appui 23 (voir figure 7).

L'organe de poussée 19, représenté seul sur la figure 8, possède une forme générale cylindrique. Il comporte deux rainures longitudinales 28 diamétralement opposées, qui coopèrent avec des nervures 29 prévues sur des faces opposées du support 13 (voir aussi figure 2), pour guider en translation cet organe de poussée 19 tout en l'immobilisant en rotation. En position montée, l'organe de poussée 19 est appliqué contre le bras radial 18 du patin 10. L'organe de poussée 19 comporte encore deux crans 30 diamétralement opposés, qui sont prévus pour coopérer chacun avec l'une des dents 25 des dentures 24 de la butée mobile 21.

En position montée du mécanisme de compensation de jeu 17, dans l'exemple de réalisation représenté, le ressort de compression 20 est situé à l'extérieur de la butée mobile 21. Une extrémité du ressort de compression 20 est en appui sur l'organe d'appui 23, tandis que son autre extrémité prend appui contre l'organe de poussée 21. Le ressort de torsion 22 est logé dans l'évidement central de la butée mobile 21 ; ce ressort de torsion 22 est accroché par une extrémité à ladite butée mobile 21, dans le logement 26, tandis que son autre extrémité est accrochée à l'organe d'appui 23, dans la zone d'attache 27.

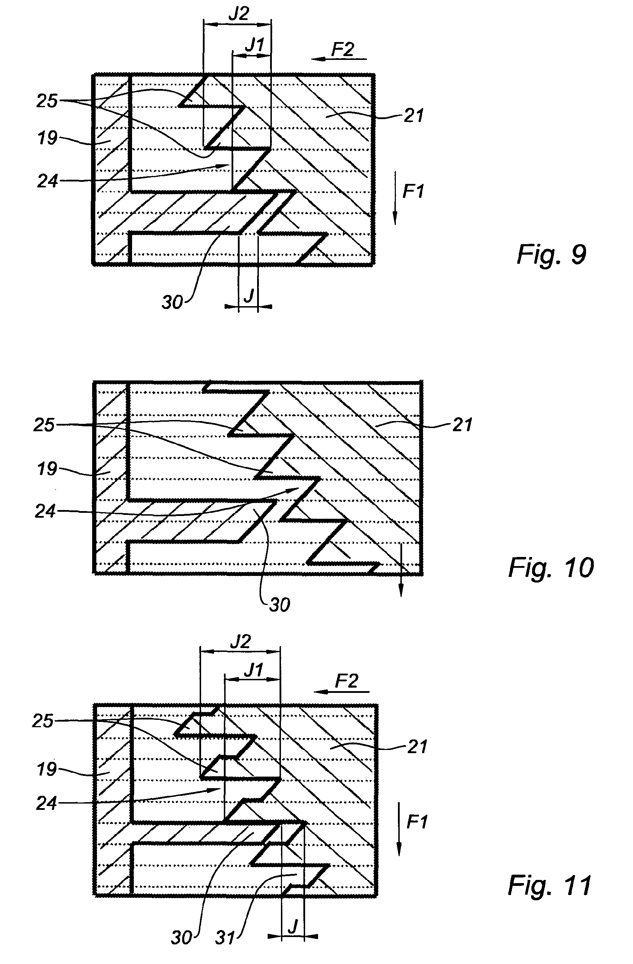

En fonctionnement normal, comme l'illustre la figure 9, le mécanisme de rattrapage de jeu 17 se trouve dans une configuration pour laquelle chaque cran 30 de l'organe de poussée 19 est en contact contre une paroi d'une dent 25 d'une denture 24 de la butée mobile 18, le contact étant maintenu par le ressort de torsion 22 qui agit dans le sens de la flèche F1. La poussée du ressort de compression 20, agissant dans le sens axial de la flèche F2, s'exerce sur l'organe de poussée 19 qui le transmet au patin 10, de sorte que la crémaillère 3 est maintenue en contact avec le pignon de direction 5. Cet état de fonctionnement est maintenu pour tout jeu J compris entre une valeur de jeu minimale J1 et une valeur de jeu maximale J2.

Lorsque le jeu J dépasse la valeur de jeu maximale J2, en raison d'une usure devenue assez importante, le contact entre les crans 30 de l'organe de poussée 19 et les dents 25 de la butée mobile 21 n'existe plus (voir figure 10). A ce moment, le ressort de torsion 22 entraîne en rotation la butée mobile 21, jusqu'à ce que se réalise un nouveau contact entre chaque cran 30 de l'organe de poussée 19 et les dents 25 suivantes des dentures 24 de la butée mobile 21. Le jeu J a ainsi été réduit à la valeur de jeu minimale J1, le mécanisme de compensation de jeu 17 se trouvant ramené dans la configuration de la figure 9, toutefois avec contact sur la dent 25 suivante, plus « haute », de chaque denture étagée 24.

Comme le montrent encore les figures 9 et 10, les dents 25 d'au moins une denture étagée 24 possèdent avantageusement un profil globalement triangulaire. Grâce à une telle configuration, lors de la rotation de la butée mobile 21, un léger recul du patin 10 est autorisé en position de repos, ce qui permet d'obtenir un jeu entre la crémaillère 3 et le pignon de direction 5, pour absorber les défauts de denture de ces éléments.

La figure 11 montre une variante de forme des dents 25 des dentures étagées 24. Conservant une allure triangulaire, les dents 25 comportent ici des aspérités et/ou des échancrures 31, qui sont prévues pour un encastrement des crans 30, de manière à stabiliser la butée mobile 21 en position de repos.

Enfin, d'une manière non représentée, le support 13 peut être monté dans la partie de carter correspondante avec interposition d'un ou plusieurs joints aptes à absorber les bruits et vibrations.

On ne se s'écarterait pas de cadre de l'invention, telle que définie dans les revendications annexées :
- En modifiant le détail des dentures de la butée mobile ;
- En ayant recours à toutes dispositions équivalentes, notamment dans le mécanisme de compensation de jeu où une interversion de position des pièces peut être réalisée, par exemple avec un ressort de torsion de diamètre plus grand placé à l'extérieur de la butée mobile, et un ressort de compression de diamètre plus petit placé à l'intérieur de la butée mobile, ou encore avec des dentures étagées formées sur l'organe de poussée et des crans prévus sur la butée mobile ;
- En destinant ce dispositif de poussoir à des systèmes de direction de tous types: directions manuelles, directions assistées électriques, directions assistées hydrauliques.

## Revendications

1. Dispositif de poussoir à excentrique pour direction à crémaillère de véhicule automobile, le dispositif de poussoir (8) comprenant un patin (10) de forme arquée dont la périphérie interne (11) est excentrée par rapport à la périphérie externe (12), le patin (10) étant sollicité en rotation dans un sens par des moyens à ressort et étant prévu pour être appliqué par sa périphérie interne (11) excentrée contre le dos (9) de la crémaillère (3) pour repousser celle-ci vers les dents du pignon de direction (5), le patin (10) étant monté tournant sur un support (13) et les moyens à ressort, disposés au niveau du support (13), agissant de préférence dans un plan parallèle à la denture (6) de la crémaillère (3) sur un bras radial (18) solidaire du patin (10), **caractérisé en ce qu'** il comporte un mécanisme de compensation de jeu (17) qui comprend un organe de poussée (19) monté mobile en translation sur le support (13) mais immobilisé en rotation par rapport à ce support (13), et appuyé contre le bras radial (18) du patin (10) sous l'action d'un ressort de compression (20) inséré entre cet organe de poussée (19) et le support (13) ou un élément (23) solidaire du support (13), tandis qu'une butée mobile (21) est montée tournante, coaxialement au ressort de compression (20), relativement au support (13) ou à l'élément (23) solidaire du support (13), la butée mobile (21) étant pourvue, à son extrémité la plus proche du patin (10), d'au moins une denture (24) à dents étagées (25) coopérant avec au moins un cran (30) formé sur l'organe de poussée (19), ou vice versa, la butée mobile (21) étant liée par l'intermédiaire d'un ressort de torsion (22) au support (13) ou à l'élément (23) solidaire du support (13), de telle sorte que le ou les crans (30) puissent coopérer successivement avec les dents étagées (25) de la ou chaque denture (24).

2. Dispositif de poussoir à excentrique selon la revendication 1, **caractérisé en ce que** la butée mobile (21) est pourvue d'au moins deux dentures (24) à dents étagées (25), disposées sur autant de secteurs, par exemple deux dentures (24) diamétralement opposées occupant chacune un secteur de 180°, et **en ce que** l'organe de poussée (19) comporte autant de crans (30) coopérant avec ces dentures (24), de manière à stabiliser le mécanisme.

3. Dispositif de poussoir à excentrique selon la revendication 1 ou 2, **caractérisé en ce que** l'organe de poussée (19) comporte deux rainures longitudinales (28), diamétralement opposées, qui coopèrent avec deux nervures (29) correspondantes prévues sur des faces opposées du support (13), pour assurer le guidage en translation et l'immobilisation en rotation de cet organe de poussée (19).

4. Dispositif de poussoir à excentrique selon l'une des revendications 1 à 3, **caractérisé en ce que** le ressort de compression (20) est situé à l'extérieur de la butée mobile (21), et en appui sur un organe d'appui (23) fixé au support (13), la butée mobile (21) étant montée tournante relativement à l'organe d'appui (23).

5. Dispositif de poussoir à excentrique selon la revendication 4, **caractérisé en ce que** la butée mobile (21) est évidée en son centre, son évidement central logeant le ressort de torsion (22) qui est accroché par une extrémité à ladite butée mobile (21) et est accroché par son autre extrémité à l'organe d'appui (23).

6. Dispositif de poussoir à excentrique selon l'une des revendications 1 à 5, **caractérisé en ce que** les dents (25) d'au moins une denture étagée (24) possèdent un profil globalement triangulaire.

7. Dispositif de poussoir à excentrique selon l'une des revendications 1 à 6, **caractérisé en ce que** les dents (25) des dentures étagées (24) comportent des aspérités et/ou des échancrures (31), prévues pour un encastrement des crans (30) correspondants.

## Patentansprüche

1. Schiebevorrichtung mit Exzenter für eine Zahnstangenlenkung eines Kraftfahrzeugs, wobei die Schiebevorrichtung (8) eine gekrümmte Backe (10) umfasst, deren innerer Umfang (11) im Verhältnis zum äußeren Umfang (12) exzentriert ist, wobei die Backe (10) in eine Richtung von Federmitteln rotierend beansprucht wird und dazu vorgesehen ist, um mit ihrem exzentrierten inneren Umfang (11) am Rücken (9) der Zahnstange (3) anzuliegen, um diese in Richtung der Zähne des Lenkritzels (5) zurückzudrücken, wobei die Backe (10) drehend auf einer Unterlage (13) montiert ist und die Federmittel, die auf Ebene der Unterlage (13) angeordnet sind, vorzugsweise in einer Ebene parallel zur Zahnung (6) der Zahnstange (3) auf einen radialen, mit der Backe (10) verbundenen Arm (18) wirken, **dadurch gekennzeichnet, dass** sie einen Mechanismus zur Abstandskompensation (17) aufweist, der ein Schiebeorgan (19) umfasst, das verschiebbar beweglich auf der Unterlage (13) montiert ist, aber im Verhältnis zu dieser Unterlage (13) rotierend unbeweglich ist, und gegen den radialen Arm (18) der Backe (10) unter Einwirkung einer Druckfeder (20), die zwischen diesem Schiebeorgan (19) und der Unterlage (13) oder einem mit der Unterlage (13) verbundenen Element (23) eingesetzt ist, gedrückt wird, wogegen ein mobiler Anschlag (21) koaxial zur Druckfeder (20) relativ zur Unterlage (13) oder zu dem mit der Unterlage (13) verbundenen Element (23), drehend montiert ist und der mobile Anschlag (21) mit seinem Ende, das der Backe (10) am nächsten ist, mit mindestens einer Zahnung (24) mit stufigen Zähnen (25) ausgestattet ist, die mit mindestens einer Rastkerbe (30) zusammenarbeiten, die auf dem Schiebeorgan (19) ausgebildet ist, oder umgekehrt, wobei der mobile Anschlag (21) über eine Torsionsfeder (22) mit der Unterlage (13) oder dem mit der Unterlage (13) verbundenen Element (23) derart verbunden ist, dass die Rastkerbe(n) (30) schrittweise mit den stufigen Zähnen (25) der oder jeder Zahnung (24) zusammenarbeiten können.

2. Schiebevorrichtung mit Exzenter nach Anspruch 1, **dadurch gekennzeichnet, dass** der mobile Anschlag (21) mit mindestens zwei Zahnungen (24) mit stufigen Zähnen (25) ausgestattet ist, die auf ebenso vielen Sektoren angeordnet sind, beispielsweise zwei diametral gegenüberliegenden Zahnungen (24), die jeweils einen Sektor von 180° belegen, und dass das Schiebeorgan (19) ebenso viele Rastkerben (30) aufweist, die mit diesen Zahnungen (24) derart zusammenarbeiten, dass der Mechanismus stabilisiert wird.

3. Schiebevorrichtung mit Exzenter nach Anspruch 1 oder 2, **dadurch gekennzeichnet, dass** das Schiebeorgan (19) zwei diametral gegenüberliegende Längsrillen (28) aufweist, die mit zwei entsprechenden Rippen (29) zusammenarbeiten, die auf gegenüberliegenden Seiten der Unterlage (13) ausgebildet sind, um die verschiebende Führung und die rotierende Unbeweglichkeit dieses Schiebeorgans (19) sicherzustellen.

4. Schiebevorrichtung mit Exzenter nach einem der Ansprüche 1 bis 3, **dadurch gekennzeichnet, dass** sich die Druckfeder (20) außerhalb des mobilen Anschlags (21) und in Abstützung auf einem Stützorgan (23) befindet, das auf der Unterlage (13) befestigt ist, wobei der mobile Anschlag (21) relativ zum Stützorgan (23) drehend montiert ist.

5. Schiebevorrichtung mit Exzenter nach Anspruch 4, **dadurch gekennzeichnet, dass** der mobile Anschlag (21) in seinem Zentrum ausgehöhlt ist, wobei seine zentrale Aushöhlung die Torsionsfeder (22) aufnimmt, die mit einem Ende am mobilen Anschlag (21) befestigt ist und mit ihrem anderen Ende am Stützorgan (23).

6. Schiebevorrichtung mit Exzenter nach einem der Ansprüche 1 bis 5, **dadurch gekennzeichnet, dass** die Zähne (25) mindestens einer stufigen Zahnung (24) ein allgemein dreieckiges Profil besitzen.

7. Schiebevorrichtung mit Exzenter nach einem der Ansprüche 1 bis 6, **dadurch gekennzeichnet, dass** die Zähne (25) der stufigen Zahnungen (24) Unebenheiten und/oder Ausschnitte (31) aufweisen, die für ein Rasten der entsprechenden Rastkerben (30) vorgesehen sind.

## Claims

1. An eccentric push device for motor vehicle rack steering, the push device (8) comprising a bowed shoe (10) whereof the inner periphery (11) is eccentric with respect to the outer periphery (12), the shoe (10) being rotated in one direction by spring means and being provided to be pressed, by its eccentric inner periphery (11), against the back (9) of the rack (3) to push the latter back toward the teeth of the steering pinion (5), the shoe (10) being mounted rotating on a support (13) and the spring means, positioned at the support (13), preferably acting in a plane parallel to the toothing (6) of the rack (3) on a radial arm (18) secured to the shoe (10), **characterized in that** it includes an anti-backlash mechanism (17) that comprises a push member (19) translatably mounted on the support (13) but immobilized with respect to said support (13), and pressed against the radial arm (18) of the shoe (10) under the action of a compression spring (20) inserted between that push member (19) and the support (13) or an element (23) secured to the support (13), while a moving stop (21) is rotatably mounted, coaxially to the compression spring (20), relative to the support (13) or the element (23) secured to the support (13), the moving stop (21) being provided, at the end thereof closest to the shoe (10), with at least one toothing (24) with stepped teeth (25) cooperating with at least one notch (30) formed on the push member (19), or vice versa, the moving stop (21) being connected by means of a torsion spring (22) to the support (13) or to the element (23) secured to the support (13), such that the notch(es) (30) can successively cooperate with the stepped teeth (25) of the or each toothing (24).

2. The eccentric push device according to claim 1, **characterized in that** the moving stop (21) is provided with at least two toothings (24) with stepped teeth (25), positioned on an equal number of sectors, for example two diametrically opposite toothings (24) each occupying a 180° sector, and **in that** the thrust member (19) includes an equal number of notches (30) cooperating with said toothings (24), so as to stabilize the mechanism.

3. The eccentric push device according to claim 1 or 2, **characterized in that** the push member (19) includes two diametrically opposite longitudinal slots (28), which cooperate with two corresponding ribs (29) provided on opposite faces of the support (13), to provide translational guiding and rotational immobilization of said push member (19).

4. The eccentric push device according to one of claims 1 to 3, **characterized in that** the compression spring (20) is situated outside the moving stop (21), and bearing on a bearing member (23) fixed to the support (13), the moving stop (21) being rotatably mounted relative to the bearing member (23).

5. The eccentric push device according to claim 4, **characterized in that** the center of the moving stop (21) is hollow, the central recess thereof housing the torsion spring (22), which is fastened by one end to said moving stop (21) and is fastened by its other end to the bearing member (23).

6. The eccentric push device according to one of claims 1 to 5, **characterized in that** the teeth (25) of at least one stepped toothing (24) have a globally triangular profile.

7. The eccentric push device according to one of claims 1 to 6, **characterized in that** the teeth (25) of the stepped toothings (24) include asperities and/or indentations (31), provided to embed the corresponding notches (30).
